# EUROPEAN PATENT APPLICATION

(11) **EP 4 718 189 A1**
(43) Date of publication of application: **01.04.2026**
(21) Application number: 25202651.3
(22) Date of filing: 17.09.2025
(51) Int. Cl.: G05B 19/418

(54) **AUTOMATIC YARD SPINDLE TRANSIT CONTROL METHOD AND APPARATUS, AND STORAGE MEDIUM**

(30) Priority: 29.09.2024 CN 202411366960
(71) Applicant: Zhejiang Hengyi Petrochemical Co., Ltd., Zhejiang 311200 (CN); Jiaxing Yipeng Chemical Fiber Co., Ltd., Jiaxing City, Zhejiang Province 314031 (CN)
(72) Inventor: QIU, Yibo, Yaqian Town, Xiaoshan District, Hangzhou, Zhejiang, 311200 (CN); PENG, Xiantao, Yaqian Town, Xiaoshan District, Hangzhou, Zhejiang, 311200 (CN); JIN, Junliang, Yaqian Town, Xiaoshan District, Hangzhou, Zhejiang, 311200 (CN); CHEN, Jiangang, Yaqian Town, Xiaoshan District, Hangzhou, Zhejiang, 311200 (CN); LI, Dake, Yaqian Town, Xiaoshan District, Hangzhou, Zhejiang, 311200 (CN); KONG, Rongwei, Yaqian Town, Xiaoshan District, Hangzhou, Zhejiang, 311200 (CN); ZHANG, Yaobin, Yaqian Town, Xiaoshan District, Hangzhou, Zhejiang, 311200 (CN)
(74) Representative: Bringer IP

(57) **Abstract**

Provided are an automatic yard spindle transit control method and apparatus, and storage medium, relating to the field of intelligent chemical fiber technology. The method includes: when a control button of a first PLC is in an online mode and communication between the first PLC and an MES is normal, obtaining second business data of a target workstation from second PLCs and sending first business data to the MES by the first PLC, to enable the MES to determine an online transit condition based on the first business data and return transit indication information to the first PLC (S201); and when the first PLC receives the transit indication information, sending an analysis result of the transit indication information to the second PLCs by the first PLC, to enable the second PLCs to control the target workstation to perform a transit task based on the analysis result (S202).

## Description

### TECHNICAL FIELD

The present disclosure relates to the field of intelligent chemical fiber technology, and particularly, to an automatic yard spindle transit control method and apparatus, electronic device and storage medium.

### BACKGROUND

In the field of chemical fiber production, an efficiently functioning assembly line is crucial for ensuring both productivity and efficiency. This assembly line is densely provided with numerous sites that operate in close coordination. Crucially, the smooth flow of numerous yard spindles through the assembly line, e.g., the speed at which they transit sites, is directly linked to the overall production pace and efficiency, becoming a crucial bottleneck in increasing productivity. Therefore, achieving rapid yard spindle transit in the assembly line has become a crucial challenge in the current technological innovation of chemical fiber production.

### SUMMARY

The present disclosure provides an automatic yard spindles transit control method and apparatus, electronic device and storage medium.

According to a first aspect of the present disclosure, provided is an automatic yard spindle transit control method for an automatic yard spindle transit control system, where the automatic yard spindle transit control system includes a manufacturing execution system (MES), a first programmable logic controller (PLC), and a plurality of second PLCs, each of the plurality of second PLCs is configured to control at least one workstation, the plurality of second PLCs are respectively connected to the first PLC, each of the plurality of second PLCs is connected to at least one workstation, and the first PLC is capable of connecting to the MES. The automatic silk ingot transit control method may include:
in a case of that a control button of the first PLC is in an online mode and communication between the first PLC and the MES is normal, obtaining second business data of a target workstation from the plurality of second PLCs and sending first business data to the MES by the first PLC, to enable the MES to determine an online transit condition based on the first business data and return transit indication information to the first PLC, where the first business data is generated by the first PLC based on the second business data and RFID information read from a RFID site corresponding to the target workstation; and
in a case of that the first PLC receives the transit indication information, sending an analysis result of the transit indication information to the plurality of second PLCs by the first PLC, to enable the plurality of second PLCs to control the target workstation to perform a transit task based on the analysis result.

According to a second aspect of the present disclosure, provided is an automatic yard spindles transit control apparatus for an automatic yard spindles transit control system, where the automatic yard spindle transit control system includes a manufacturing execution system (MES), a first programmable logic controller (PLC), and a plurality of second PLCs, each of the plurality of second PLCs is configured to control at least one workstation, the plurality of second PLCs are respectively connected to the first PLC, each of the plurality of second PLCs is connected to at least one workstation, and the first PLC is capable of connecting to the MES. The automatic yard spindles transit control apparatus may include:
a first control module configured to, in a case of that a control button of the first PLC is in an online mode and communication between the first PLC and the MES is normal, obtain second business data of a target workstation from the plurality of second PLCs and send first business data to the MES by the first PLC, to enable the MES to determine an online transit condition based on the first business data and return transit indication information to the first PLC, where the first business data is generated by the first PLC based on the second business data and RFID information read from a RFID site corresponding to the target workstation; and
a second control module configured to, in a case of that the first PLC receives the transit indication information, send an analysis result of the transit indication information to the plurality of second PLCs by the first PLC, to enable the plurality of second PLCs to control the target workstation to perform a transit task based on the analysis result.

According to a third aspect of the present disclosure, provided is an electronic device including:
at least one processor; and
a memory connected in communication with the at least one processor;
where the memory stores an instruction executable by the at least one processor, and the instruction, when executed by the at least one processor, enables the at least one processor to perform the method according to any of the embodiments of the present disclosure.

According to a fourth aspect of the present disclosure, provided is a non-transitory computer-readable storage medium storing a computer instruction thereon, where the computer instruction is used to cause a computer to perform the method according to any of the embodiments of the present disclosure.

According to the technology of the present disclosure, by integrating RFID technology, MES, and PLC control, it is possible to implement automated yard spindle transit management and improve yard spindle transit efficiency.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The above and other features, advantages, and aspects of various embodiments of the present disclosure will become more apparent with reference to the following detailed description in conjunction with the accompanying drawings. Identical or similar reference numerals denote identical or similar elements in the accompanying drawings, in which:
FIG. 1 is a schematic diagram of an automatic yard spindle transit control system according to an embodiment of the present disclosure;
FIG. 2 is a schematic flow chart of an automatic yard spindle transit control method according to an embodiment of the present disclosure;
FIG. 3 is a schematic layout diagram of RFID sites according to an embodiment of the present disclosure;
FIG. 4 is a schematic allocation diagram of RFID readers according to an embodiment of the present disclosure;
FIG. 5 is a schematic structural diagram of an automatic yard spindle transit control apparatus according to an embodiment of the present disclosure; and
FIG. 6 is a block diagram of an electronic device for implementing an automatic yard spindle transit control method according to an embodiment of the present disclosure.

### DETAILED DESCRIPTION

The following describes exemplary embodiments of the present disclosure with reference to the accompanying drawings, and various details of the embodiments of the present disclosure are included to aid understanding, but these should be considered exemplary only. Therefore, those skilled in the art will recognize that various changes and modifications may be made to the embodiments described herein without departing from the scope of the present disclosure. Similarly, for clarity and conciseness, descriptions of well-known functions and structures are omitted from the following description.

The terms "first," "second," "third," and the like in embodiments, claims, and drawings of the present disclosure are used to distinguish similar objects and are not necessarily used to describe a particular order or sequential sequence. Furthermore, the terms "comprising," "including," "having," and any variations thereof are intended to cover non-exclusive inclusions, such as, for example, inclusion of a list of steps or elements. Methods, systems, products, or devices are not necessarily limited to include the steps or elements expressly listed and may include other steps or elements not expressly listed or inherent to such processes, methods, products, or devices.

Before introducing the technical solutions of the embodiments of the present disclosure, the technical terms that may be used in the present disclosure will be first explained:
MES: a software system used to monitor and manage manufacturing processes, capable of collecting, processing, and analyzing production data in real time to optimize production planning and resource allocation.
PLC: an industrial digital computer used to control automated equipment, such as mechanical apparatuses and robots on an assembly line. It performs logical operations and processing on input signals according to preset programs, and outputs control signals to control the operation of the equipment.
RFID: a communication technology that may identify a specific target and read and write related data by using radio signals without establishing mechanical or optical contact between an identification system and the specific target.
RFID site: a physical location or device where an RFID reader is deployed, used to read and record information from RFID tags transitting that location.
Business data: business-related data generated during the manufacturing process, such as device status, product quantity, production progress, etc. Such data forms the basis for decision-making and control by the MES and PLC.

Transit indication information (also regarded as transit indications): indications and parameter information generated by the MES based on business data analysis to guide a device to perform transit tasks.

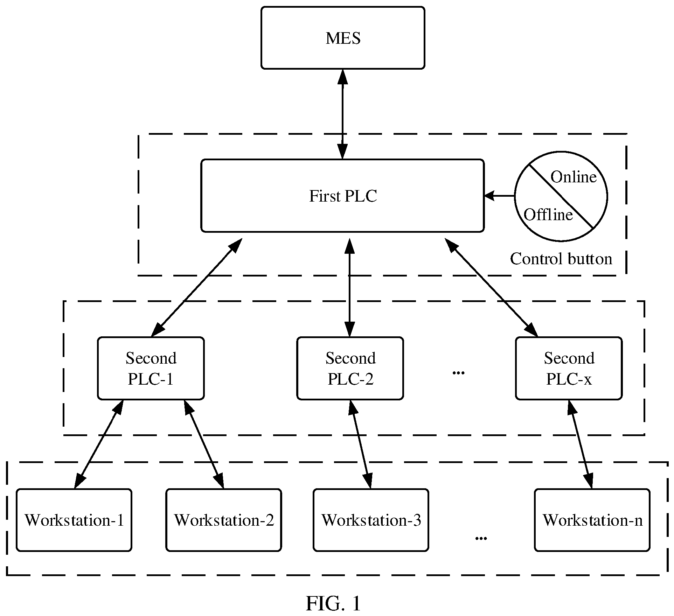

FIG. 1 is a schematic diagram of an automatic yard spindle transit control system according to an embodiment of the present disclosure. As shown in FIG. 1, the automatic yard spindle transit control system may include a MES, a first PLC, and a plurality of second PLCs. The plurality of second PLCs may be connected to the first PLC, and the first PLC may be connected to the MES. Each second PLC may control at least one site. The second PLCs may be primarily responsible for collecting and processing real-time business data for a target workstation and providing it to the first PLC. The first PLC may interact with the second PLCs, and obtain second business data from the second PLCs. The first PLC may also interact with the MES, send first business data to the MES and receive transit indication information issued by the MES based on the first business data. The first PLC may then notify the second PLCs to execute the transit indication information for the target workstation.

In some embodiments, the MES may determine transit indication information for the target workstation based on the first business data sent by the first PLC, and return the transit indication information to the first PLC.

In some embodiments, the first PLC may obtain first business data for the target workstation based on the second business data for the target workstation obtained from the second PLCs.

In some embodiments, each second PLC may be configured to acquire and store second business data for the target workstation it manages.

Here, the first business data may be collected and processed by the first PLC, including collection of information such as the real-time status of the target workstation, yard spindle processing progress, yard spindle quality detection results, request type and the like. Such data is important for monitoring the operation status of the production line and making decisions on whether to allow a site to be transited.

Here, the second business data may be collected and processed by the second PLCs, including collection of information such as the real-time status of the target workstation, yard spindle processing progress, yard spindle quality detection results, yard spindle barcodes and the like. Such data is important for monitoring the operation status of the production line.

According to the automatic yard spindle transit control system of the embodiment of the present disclosure, the MES may monitor the status of each site in real time and make adjustments and optimizations as needed through real-time communication and data processing between the MES, the first PLC, and the second PLCs. This automated control may reduce manual intervention, improve the efficiency and accuracy of yard spindle transit, reduce material waste and downtime caused by human error, and lower production costs. This automated control may ensure the stability and consistency of yard spindles during transit, and help to improve overall production pace and efficiency. By using the first PLC as an intermediary between the MES and the plurality of second PLCs, the automatic yard spindle transit control system may offer significant advantages in centralized management, data integration, reduced MES burden, enhanced system scalability, improved security and stability, and a simplified network structure.

If communicating directly with the plurality of second PLCs, the MES would need to process a large amount of real-time data and requests, which may increase the MES's burden and affect its performance. However, by using the first PLC as an intermediary, the MES only needs to communicate with the first PLC, reducing its processing burden. Without the first PLC as the intermediary, the MES needs to establish direct communication with each of the second PLCs, making the network structure complex and difficult to manage. By using the first PLC as an intermediary, it may be capable of greatly simplifying the network structure, and making the entire communication process clearer and more organized. The first PLC may be used as a security barrier, to validate and filter data from the second PLCs to prevent malicious or erroneous data from entering the MES. Furthermore, the first PLC's redundancy and fault tolerance may improve system stability and reliability, and ensure normal operation of the production line even in the event of failure of a part of devices.

As production lines expand and upgrade, additional second PLCs may be required. If the MES communicates directly with each second PLC, the MES may be configured and modified correspondingly for each expansion. However, by using the first PLC as the intermediary, support for a new second PLC only needs to be added into the first PLC, eliminating the need to modify the MES configuration. The first PLC may centrally receive business data from the plurality of second PLCs and perform unified processing and analysis. Such approach may make control of the entire production line more centralized and organized, reducing the complexity and confusion associated with direct communication between the MES and the plurality of second PLCs. The first PLC may integrate data from different second PLCs to form a more comprehensive production view. This may enable the MES to make decisions based on more comprehensive data, thereby optimizing production planning and resource allocation. Furthermore, the first PLC may pre-process and filter data, reducing the amount of data transmitted to the MES and improving communication efficiency.

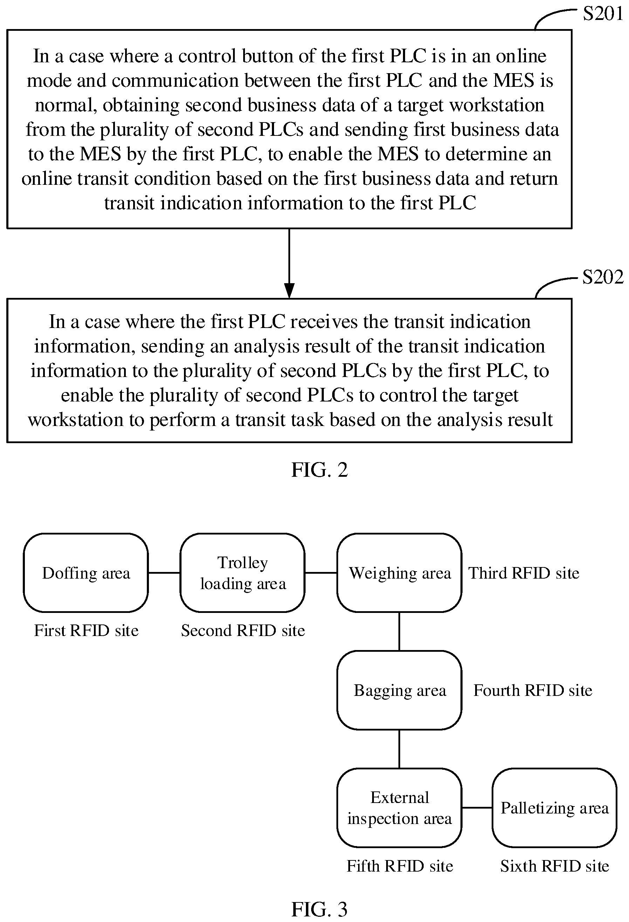

The present disclosure may provide an automatic yard spindle transit control method, and FIG. 2 is a schematic flow chart of the automatic yard spindle transit control method according to an embodiment of the present disclosure. The automatic yard spindle transit control method may be applied to an automatic yard spindle transit control apparatus, which is disposed in an electronic device that is used in an automatic yard spindle transit control system. The electronic device may include, but is not limited to, a fixed device and/or a mobile device. For example, the fixed device may include, but is not limited to, a server, which may be a cloud server or a standard server. For example, the mobile device may include, but is not limited to, a mobile phone, a tablet computer, and a laptop computer. In some possible embodiments, the automatic yard spindle transit control method may be also implemented by a processor invoking a computer-readable indication stored in a memory. As shown in FIG. 2, the automatic yard spindle transit control method may include the following steps:
S201: in a case of that a control button of the first PLC is in an online mode and communication between the first PLC and the MES is normal, obtaining second business data of a target workstation from a plurality of second PLCs and sending first business data to the MES by a first PLC, to enable the MES to determine an online transit condition based on the first business data and return transit indication information to the first PLC. The first business data may be generated by the first PLC based on the second business data and RFID information read from a RFID site corresponding to the target workstation.
S202: in a case of that the first PLC receives the transit indication information, sending an analysis result of the transit indication information to the second PLCs by the first PLC, to enable the second PLCs to control the target workstation to perform the transit task based on the analysis result.

In some embodiments, the control button may be a physical switch or knob for controlling the operating mode of the first PLC. The control button may be used to switch the operating mode of the first PLC (e.g., online mode or offline mode). The offline mode may be a specific position or mark on the control button, and when the control button is switched to this position, offline mode may be selected to actively interrupts communication with the MES. The online mode may be a specific position or mark on the control button, and when the control button is switched to this position, the online mode may be selected to indicate that communication with the MES is desired.

In some embodiments, the control button of the first PLC may be checked to determine whether it is in the online mode, so as to ensure that the system is operational. Next, whether communication between the first PLC and the MES is normal may be checked through a network communication protocol.

In some embodiments, after determining that the communication is normal, the first PLC may obtain the second business data for the target workstation from the second PLC via a predefined communication interface. The second business data may include information such as current status, location, and production batch of the yard spindle.

In some embodiments, the first PLC may read the RFID information from the RFID site corresponding to the target workstation. The RFID information generally includes key information such as the unique identifier and the production batch of the yard spindle. The first PLC may combine the second business data with the RFID information to generate the first business data, which may more comprehensively and accurately reflect the current status of the yard spindle and the required task.

In some embodiments, the first PLC may send the first business data to the MES, and the MES may determine the online transit condition based on predefined business logic and rules (e.g., production plan, inventory status, and equipment status). Based on the determination result, the MES may generate the transit indication information and return it to the first PLC via the communication interface. The transit indication information may explicitly indicates whether the yard spindle is allowed to transit the site, that is, whether the yard spindle can proceed to the next production stage.

In some embodiments, after receiving the transit indication information, the first PLC may analyze it to determine whether it is "permitted" or "prohibited". If the analysis result indicates that the yard spindle is permitted, the first PLC may notify the transit device or directly controls the transit device to transfer the yard spindle processed at the target workstation to the next workstation following the target workstation. If the analysis result indicates that the yard spindle is prohibited, the first PLC may notify the transit device or directly control the transit device to prohibit the target workstation from executing the yard spindle transit task, and resend the second business data for the target workstation. If the analysis result indicates that the yard spindle is prohibited, an alarm mechanism may be triggered to notify the operator or perform other corresponding action.

Here, the transit device may refer to automated equipment used to transfer materials (e.g.g yard spindles) between different workstations on the production line, such as conveyor belts, manipulators, and automated transport carts. The above is merely an illustrative description and is not intended to limit all possible devices included in the transit device, and this is just not an exhaustive list.

In some embodiments, the first PLC may obtain the second business data of each workstation from each second PLC, and generate the first business data for each workstation. These first business data may contain information about the status of all relevant workstations and operations that need to be performed. The MES may analyze the first business data and determine the transit indication information of the target workstation (i.e., the workstation that currently needs to perform the yard spindle transit task). The transit indication information may include transit permission or transit prohibition. When the transit indication information is transit permission, it may also include parameters such as the specific time, target position, speed, etc for transit. The MES may send the generated transit indication information to the first PLC via the network or other communication method such as the Management Interface (MI).

In some embodiments, after receiving the transit indication information from the MES, the first PLC may analyze the transit indication information and extract specific control indications and parameters. After completing the analysis, the first PLC may transmit the analysis result (i.e., specific control indications and parameters) to the second PLC corresponding to the target workstation via a communication interface or communication protocol. After receiving the analysis result, the second PLC may control the mechanical device or robot, or other transit device at the target workstation to perform the yard spindle transit task based on the control indications and parameters contained in the analysis result.

In some embodiments, during system startup, the communication protocol and parameters between the first and second PLCs may be configured to ensure stable communication between them. The connection between the first PLC and the MES may be configured to ensure that the first PLC can send the first business data to the MES and receive the transit indication information returned by the MES. The first PLC may proactively obtain the second business data (e.g., current operation status, the number of yard spindles to be processed, processing time, etc.) of the target workstation from the second PLC corresponding to the target workstation. After obtaining the second business data, the first PLC may convert the second business data into the first business data (e.g., whether the transit condition is met, estimated transit time, etc.) based on a preset algorithm or logic. If the connection between the first PLC and the MES is lost for any reason (such as a network failure or MES maintenance), the first PLC may automatically switch to offline mode. In this mode, the first PLC may record the first business data and send the transit indication information (such as a "transit permission" signal) to the second PLC. After receiving the transit indication information, the second PLC may control the target workstation to execute the yard spindle transit task, including moving the yard spindle to the next workstation and updating status information. Once the connection between the first PLC and the MES is restored, the system may automatically synchronize data and adjust subsequent operations based on the latest indications from the MES.

For example, assuming that there are multiple workstations on a production line, and each workstation may be responsible for a different processing task. The first PLC may periodically obtain the second business data for the current workstation from the second PLC. When a yard spindle at a workstation (e.g., a weighing workstation) is processed and needs to proceed to the next process, if the MES is temporarily unavailable, the first PLC may send the transit indication information of "transit permission" to the second PLC on behalf of the MES. Subsequently, the second PLC may send an indication to a transit device (such as a conveyor belt or robotic arm) to transport the processed yard spindle to the next workstation (e.g., a coil diameter measurement workstation) for further processing.

The main types of yard spindles involved in embodiments of the present disclosure may include one or more of Partially Oriented Yarns (POY), Fully Drawn Yarns (FDY), Draw Textured Yarns (DTY) (or regarded as Low-Elastic Yarns) and the like. For example, the yarn types may include Polyester Partially Oriented Yams, Polyester Fully Drawn Yarns, Polyester Drawn Yarns, Polyester Low-Elastic yarns (Polyester Draw Textured Yarns), polyester staple fibers (PSF) and the like.

According to the technical solution of embodiments of the disclosure, the MES may be enabled to monitor the status of each workstation in real time and adjust and optimize the transit strategy as needed through real-time communication and data processing between the MES, the first PLC, and the plurality of second PLCs. Combining RFID technology with real-time data from the MES, it may ensure accurate assessment of transit condition and reduce production issues caused by human error. Automated control may reduce manual intervention and improve the accuracy and efficiency of yard spindle transit. The system can flexibly adjust the transit strategies based on real-time indications from the MES to adapt to different production needs. This may enable real-time collection, processing, and feedback of production data, and provide robust data support for yard spindle production management.

According to embodiments of the disclosure, the automatic yard spindle transit control method may further include determining that the first PLC is disconnected from the MES upon detecting that a control button corresponding to the first PLC has switched to offline mode.

In some embodiments, the first PLC continuously monitors the status of a control button directly connected thereto, and the control button may be typically installed on a control panel to allow an operator to manually switch the operating mode of the first PLC. Upon detecting that the control button has switched to offline mode, the first PLC may immediately record this event and determine that the MES has been disconnected or is about to be disconnected. It is noted that such a detection method may primarily depend on hardware signals (e.g., the on/off status of the cotrol button), and thus this detection method may be instant and reliable. After determining offline mode, the first PLC mayobtain the second business data of the target workstation from the second PLC according to a predefined process, and convert the second business data into the first business data. Based on the processed first business data, the first PLC may determine whether to transmit a transit indication to the second PLC to control the transit task of the yard spindle. Generally, the first PLC may transmit a transit indication for permitting transit to the second PLC. The system should be capable of handling various abnormal situations and automatically synchronize data or restore the connection with the MES when conditions return.

For example, in the case of an automated packaging line in the chemical fiber industry, the MES cannot communicate with the first PLC temporarily due a network failure. In this case, the operator can approach the control panel where the first PLC is disposed and switch the control button to offline mode. Upon detecting this change, the first PLC may automatically determine that the connection with the MES has been lost and immediately initiate the transit control process of the offine mode. The first PLC then may tranmit transit indication information for permitting transit to the second PLC, to ensure smooth movement of the yard spindle from the current workstation to the next workstation.

It is possible to, by introducing a control button, allow operators to directly intervene in the production process under specific circumstances, improving the system's flexibility and ability to respond to emergencies. The status detection of the control button may provide a visual indication of the connection status between the first PLC and the MES, helping to promptly identify and address connection issues, thereby improving system reliability. If the MES is unavailable, the operator may simply turn the control button to switch the first PLC to offline mode, allowing the system to continue executing transit tasks, simplifying operational processes and reducing downtime.

In some embodiments, the second business data may be generated by the second PLC based on task execution results corresponding to the target workstation.

Here, task execution results may refer to the result information generated by the target workstation after executing a specific production task, which reflects task achivement, including but not limited to task completion status, time consumption, quality inspection results, etc.

Here, the second business data may be a data set generated by the second PLC based on the task execution results for subsequent processing (e.g., transit determination).

In some embodiments, a second PLC may serve as the direct control unit for the target workstation, responsible for executing and monitoring production tasks at that workstation. These tasks may include processing, detecting, and packaging yard spindles. During task execution, the second PLC may collect relevant data of task execution in real time, such as start and end time, execution status (success, failure, paused, etc.), output, and quality parameters. Upon completion of the task, the second PLC may generate second business data based on the collected task execution result data. This data may primarily reflect the completion status of the task at the target workstation and may serve as an important basis for subsequent transit determination.

In some embodiments, the second PLC may send the generated second business data to the first PLC via a predetermined communication protocol. This transmission process should ensure data integrity and timeliness. After receiving the second business data, the first PLC may combine it with data (e.g., production plan, inventory status, RFID information, etc.) from other sources, to further process and generate the first business data. The first PLC may send the first business data to the MES for online transit condition determination. Based on preset rules and logic, the MES may evaluate whether the yard spindle meet the transit condition and return a transit indication to the first PLC.

Suppose there is an yard spindle loading workstation responsible for placing the yard spindles onto a pallet. The second PLC may control the execution of the yard spindle loading task at this workstation and record task execution result data, such as the start and end time of each loading. After a batch of yard spindles has been loaded, the second PLC may generate second business data (including the total number of yard spindles in the batch, the loading time, the batch number of the yard spindles, etc.) based on the task execution result data, and may send the second business data to the first PLC. The MES may determine whether to allow the batch of yard spindles to pass to the next production step (such as weighing) by combining with other data (e.g., the production plan and inventory status).

In this way, the second PLC may generate the second business data directly based on the task execution result data, reducing errors in data transmission and conversion, and improving data accuracy and reliability. Real-time task execution monitoring and rapid data processing may enable the system to quickly respond to production changes and adjust transit strategies. Accurate feedback on task execution results may allow the system to better coordinate the production tempo between workstations and optimize the overall production process.

In the disclosed embodiments, the second business data may be generated by the second PLC based on the task execution results corresponding to the target workstation and the RFID information read by the RFID site corresponding to the target workstation.

In some embodiments, the second PLC may be responsible for monitoring and managing the actual production activities of the target workstation, such as the processing and detection of yard spindles. When the target workstation completes a task (e.g., completing processing of yard spindles), the second PLC may collect the execution result of this task, including task completion status, time consumption, qualification, etc. Simultaneously, the second PLC may read RFID information from the RFID site corresponding to the target workstation. This information may be typically associated with the yard spindle being processed, including its unique identifier and production batch.

In some embodiments, the second PLC may combine the task execution results and RFID information to generate second business data. The second business data may not only reflect the physical status of the yard spindles (e.g., location, batch), but also include the specific execution status and results of the task.

In some embodiments, the second PLC may send the second business data to the first PLC, or store the second business data for the first PLC to periodically access. After determining normal communication with the MES, the first PLC may further process this data and combine it with data (e.g., production plan, inventory status, etc.) from other sources, to generate the first business data. The first PLC may send the first business data to the MES for online transit condition determination. Based on preset rules and logic, the MES may determine whether the yard spindle meet the transit condition, and return a transit indication to the first PLC.

Suppose there is an automated packaging workstation responsible for packaging processed yard spindles. The second PLC may monitor the execution of the packaging task at this workstation. When the package of yard spindles is completed, the second PLC may record information such as the completion time and packaging quality, and read the RFID tag information (e.g., batch number, production date, etc.) of the packaged yard spindles from the corresponding RFID site. Combining this information, the second PLC may generate the second business data and send it to the first PLC. The first PLC may further process this data and send it to the MES for online transit determination. If the MES determines that the yard spindle meets the transit condition (such as qualified packaging and insufficient inventory), it may send indication information of "transit permission" to the first PLC. After analyzing this information, the first PLC may notify the second PLC to start a conveyor to transport the yard spindle to a next storage location. The target object may be automatically identified through RFID and relevant data may be captured, eliminating the need for manual intervention and adapting to various environments.

This direct data collection from the task execution site and RFID sites may ensure the real-time and accuracy of the second business data, providing a reliable basis for subsequent transit determination. Combined with the MES's online judgment function, it is possible to enable intelligent decision-making on yard spindle transit condition, improving the flexibility and response rates of production management. The close collaboration between the first and second PLCs, as well as effective communication with the MES, may ensure a smooth and efficient production process.

In some embodiments, the automatic yard spindle transit control method may further include: during a yard spindle transit process, sending, by the first PLC, a task control instruction to each second PLC based on the transit indication information from the MES and the information read from each RFID site, to cause each second PLC to control the automated equipment at the corresponding workstation to perform the corresponding task according to the corresponding instruction.

Here, the first PLC may be responsible for not only receiving the transit indication information from the MES but also sending precise task control instruction to each second PLC based on this information and the real-time data read from each RFID site.

In some embodiments, the first PLC may first receive the transit indication information from the MES, which clearly indicates which yard spindles can transit and the specific requirements for transit (e.g., the target workstation, priority, etc.). The first PLC may analyze the transit indication information, understand its meaning, and prepare the corresponding task control instruction.

In some embodiments, during a yard spindle transit process, the first PLC may continuously read the RFID information of the transit yard spindles from each RFID site. This information may include the unique identifier of the yard spindle, production batch, current location, etc. By reading RFID information in real time, the first PLC can track the real-time location and status of the yard spindles, ensuring the accuracy and timeliness of task control instructions.

In some embodiments, based on the transit indication information of the MES and data read from the RFID site, the first PLC may generate task control instruction for each second PLC. These indications may detail the tasks to be performed (e.g., starting a conveyor, adjusting equipment parameters, performing quality inspections, etc.), the execution time, the target workstation, and other information. The first PLC may send the task control instruction to the corresponding second PLC via a communication interface. After receiving the task control instruction, each second PLC may analyze the indications and control the automated equipment at the corresponding workstation to perform the corresponding task according to the indications. During execution, the second PLC may provide real-time feedback to the first PLC on the execution status, allowing the first PLC to monitor and adjust.

In this way, through close collaboration between the first and second PLCs, fully automated control of the yard spindle transit process may be achieved, thereby reducing manual intervention and improving production efficiency and accuracy. Real-time reading of RFID information and receiving MES indications may enable the system to quickly respond to production changes and promptly adjust task control instruction to ensure smooth production processes. Based on transit indication information of the MES and RFID information, the system can more rationally allocate and schedule resources (e.g., equipment, manpower, materials, etc.), optimize production processes, and improve resource utilization efficiency.

In some embodiments, as shown in FIG. 3, the automatic yard spindle transit control system may include six RFID sites: the first RFID site may correspond to the yard spindle doffing area, the second RFID site may correspond to the trolley loading area, the third RFID site may correspond to the weighing area, the fourth RFID site may correspond to the bagging area, the fifth RFID site may correspond to the external inspection area, and the sixth RFID site may correspond to the palletizing area.

In the automatic yard spindle transit control system, six RFID sites may be set up to achieve full tracking and management of yard spindles throughout the production process. Each RFID site may conrrespond to a key area in the yard spindle production process. The station layout may be as follows:
The first RFID site may be installed in the yard spindle doffing area, and used to read the RFID tag information on the yard spindle as the yard spindle drops from the production line into a yard spindle box or trolley, to record the yard spindle's initial status and location.

The second RFID site may be disposed in the trolley loading area, and used to read the RFID tag information when the yard spindle is transferred to the trolley for the next process step, to confirm the yard spindle's batch and quantity.

The third RFID site may be disposed in the weighing area, and used to read the RFID tag information before and after weighing the yard spindle, to ensure the accuracy of the weighing data and associte it to the yard spindle's identity.

The fourth RFID site may be disposed in the bagging area, and used to read the RFID tag information when the yard spindle is weighed and ready for bagging and packaging, to record the packaging status and packaging time.

The fifth RFID site may be disposed in the external inspection area, and used to read the RFID tag information on the yard spindle before and after visual inspection, to facilitate tracking of inspection results and the handling of defective products.

The sixth RFID site may be disposed in the palletizing area, and used to read the RFID tag information when the yard spindle completes all process steps and is ready for palletizing and storage, to record its final storage location and storage time.

Each yard spindle may be assigned a unique RFID tag at the beginning of production. This tag may contain basic information such as batch number, production date, and specification of the yard spindle.

In some embodiments, an RFID site may refer to a physical location or device disposed in the production process for reading and writing RFID tag information.

In some embodiments, an RFID reader may be installed at each station, responsible for reading data from RFID tags and/or writing data into RFID tags to ensure real-time data updates and accuracy.

In some embodiments, RFID tags may be contactless automatic identification tags and communicate with the reader via radio waves to read and write data.

In some embodiments, each RFID site may be connected to a central control system (e.g., PLC or MES) via wired or wireless means to enable real-time data transmission and sharing. Based on the data read by the RFID site, the central control system may generate task control instruction and send them to the corresponding production equipment or robots to guide them to perform the corresponding operations.

Suppose a yard spindle production line is provided with the above six RFID sites. When a batch of yard spindles drops from the production line into a yard spindle box or trolley, the first RFID site may read the RFID tag information and send the data to the central control system. The yard spindles may be then transferred to the trolley and, after verification by the second RFID site, enter the weighing area. In the weighing area, the third RFID site may read the RFID information before and after weighing to ensure the accuracy of the weighing data. The yard spindles may then proceed to the bagging area for packaging, and the fourth RFID site may record the packaging status and packaging time. The packaged yard spindles may proceed to the external inspection area for visual inspection, and the fifth RFID site may read the RFID information before and after external inspection to track the inspection results. Finally, qualified yard spindles may proceed to the palletizing area for storage, and the sixth RFID site may record their final storage location and storage time. Throughout this process, the central control system may generate task control instruction based on the data read by the RFID sites and send them to the corresponding production equipment or robots to guide them to perform the corresponding operations.

As such, the automated identification and tracking of yard spindles using RFID technology may reduce manual intervention and errors, and improve production efficiency and accuracy. the RFID tag of each yard spindle may record key information about its progress through the production process, facilitating rapid tracing and location in the event of an issue. RFID technology may make inventory management more precise and efficient, enabling real-time visibility into inventory status and location and reducing inventory overstock and waste. Combining RFID technology with a central control system may make the entire production process more automated and intelligent, reducing reliance on manual labor.

In the disclosed embodiments, installing at least one RFID reader at each RFID site may be a key step in ensuring that the automatic yard spindle transit control system can accurately and efficiently read and record yard spindle information.

In some embodiments, appropriate RFID reader models may be selected based on specific requirements of the RFID site (e.g., reading distance, reading speed, anti-interference capabilities, etc.). These RFID readers should exhibit excellent performance stability and high reading accuracy.

In some embodiments, the selected RFID reader may be installed in an appropriate location at each RFID site. Generally, these locations should be selected along a path that the yard spindles must pass through, so that the RFID reader may accurately read the RFID tag information on the yard spindles. The RFID reader should be securely installed to prevent damage or reading failures caused by vibration or impact.

In some embodiments, each RFID site may be provided with a corresponding RFID reader. This reader should be compatible with the RFID site and capable of accurately reading and processing the information on the RFID tags. The reader should be set to an appropriate reading frequency and power to ensure accurate reading of RFID tags without affecting the normal operation of other equipment.

In an automatic yard spindle transit control system for a chemical fiber plant, each RFID site may be provided with at least one RFID reader. For example, in the weighing area, as yard spindles pass through this weighing area, the RFID reader may accurately read the RFID tag information on the yard spindles. After weighing, the second PLC may obtain weight data of the corresponding yard spindle, and transmit this data to the first PLC. The first PLC may compare the received data with the preset weighing standard, and send the comparison result to the MES. The MES may determine whether the yard spindle meets the requirements. If so, the MES may send transit indication information of "transit permission" to the first PLC. The first PLC may send this transit indication information of "transit permission" to the second PLC, which may control the bagging station for subsequent bagging and packaging operations. If not, the MES may send transit indication information of "transit prohibition" to the first PLC. The first PLC may send this transit indication information of "transit prohibition" to the corresponding processing equipment for further processing or downgrading of the yard spindle. Throughout the entire process, the stable operation of RFID sites and readers may ensure data accuracy and real-time availability, providing a strong guarantee for the smooth progress of the production process.

As such, providing each RFID site with at least one RFID reader may significantly improve the accuracy of reading RFID tags on yard spindles, and reduce missed and misread readings. Through the appropriate selection, installation, and configuration of RFID readers, the stability of the entire RFID system can be enhanced, ensuring its reliability and accuracy over long-term operation. Accurate RFID tag reading may ensure that yard spindles are correctly processed and recorded at every step in the production process, thereby optimizing production processes and improving production efficiency. The central control system can perform real-time analysis and processing of data read by RFID sites, providing strong data support for production management and decision-making.

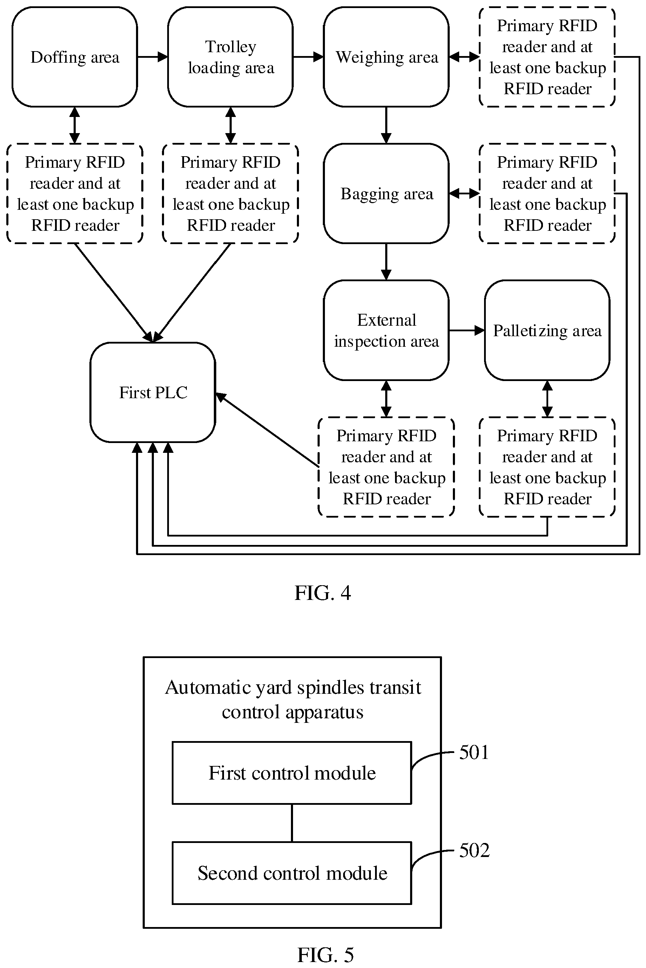

In some embodiments, as shown in FIG. 4, each RFID site may be provided with a primary RFID reader and at least one backup RFID reader.

In some specific embodiments, a primary RFID reader may be installed at a core location in each RFID site. These RFID readers should have high read accuracy, a long read range, and good anti-interference capabilities, to ensure stable and accurate reading of RFID tag information on yard spindles. The primary RFID reader should cooperate closely with the reader, transmitting data using preset communication protocols and parameters to ensure real-time and accurate data.

In some specific embodiments, one or more backup RFID readers may be deployed near the primary RFID reader or within the coverage area of one reader. These backup RFID readers should be of the same model or compatible with the primary RFID reader to ensure seamless replacement in the event of a primary RFID reader failure. The backup RFID reader may be normally in standby mode, and may not participate in normal reading operations. However, if a problem occurs with the primary RFID reader, the system can automatically or manually switch to the backup RFID reader to ensure normal operation of the RFID site.

In some specific embodiments, a monitoring module may be installed in the first PLC or MES, to monitor the operating status of the primary and backup RFID readers at each RFID site in real time. Upon detecting a failure or performance degradation of the primary RFID reader, an alarm may be immediately triggered and a switchover mechanism may be initiated. The switchover logic and parameters may be configured to ensure data continuity and accuracy are not compromised during the switchover between the primary and backup RFID readers.

For example, in an automatic yard spindle transit control system for a chemical fiber plant, each RFID site may be provided with a primary RFID reader and a backup RFID reader. As the yard spindles pass through this weighing area, the primary RFID reader may read the RFID tag information on the yard spindles, and transmit this data to the MES for processing. If the primary RFID reader fails due to a malfunction, the system may automatically switch to the backup RFID reader for reading. Simultaneously, the monitoring module in the MES may monitor the status of the primary and backup RFID readers in real time, issuing alarms and switching indications when necessary. This setup may ensure the continuity and accuracy of the RFID sites and improve the reliability and stability of the entire production process.

In this way, by adding backup RFID readers, the primary RFID reader can be quickly replaced if it fails, avoiding production interruption and data loss. The presence of a backup RFID reader can relieve the workload of the primary RFID reader, reducing the risk of performance degradation and failure caused by prolonged continuous operation. Real-time monitoring of the status of the RFID reader by the monitoring module may allow for timely detection and resolution of potential issues, reducing maintenance costs and improving efficiency.

In the disclosed embodiments, determining the online transit condition may include: determining whether the yard spindle at the target workstation meets the transit condition based on target string data corresponding to the target workstation, where the target string data may be obtained by analyzing first business data from the MES; if the transit condition is met, determining the transit indication information as "transit permission"; and if the transit condition is not met, determining the transit indication information as "transit prohibition".

In some embodiments, the transit indication information may indicate whether the yard spindle on the production line can continue to be processed at the next station. Based on the determination of the transit conditions, the transit indication information may be "transit permission" or "transit prohibition".

In some embodiments, the MES may first receive first business data from the first PLC. The first business data may typically include information about the status of the target workstation on the production line, the processing progress of yard spindles, quality inspection results, and the number of transit requests. The MES may include a dedicated data analysis module for analyzing the received first business data, to extract target string data corresponding to the target workstation. This target string data may be encoded and represent specific working states or attributes.

In some embodiments, based on the target string data obtained through analysis, the MES may further compare and analyze it against preset transit conditions. These transit conditions may include whether the processing quality of yard spindles meets standards, whether all processing tasks at the current workstation have been completed, whether there are any equipment failures or production anomalies, and so on. If the yard spindle at the target workstation meets all preset transit conditions, the MES may determine the transnit indication information as "transit permission", indicating that the yard spindle can be safely transferred to the next workstation for further processing. If the yard spindle at the target workstation does not meet any of the transit conditions, the MES may determine the transit indication information as "transit prohibition", and may trigger an appropriate alarm mechanism to notify on-site personnel for inspection and action.

In some embodiments, the MES may transmit the determination result (transit permission or transit prohibition) as transit indication information to the second PLC or other relevant control device via a communication interface. These transit devices may execute corresponding control logic (e.g., starting or stopping the transfer of the yard spindles) based on the received transit indication information.

Take the automated packaging line in the chemical fiber industry as an example, when detecting that a yard spindle has been processed at a certain workstation (such as the weighing workstation), the first PLC may send first business data containing the status information of this workstation to the MES. Upon receiving this first business data, the MES may first analyze the target string data (e.g., the QR code and weight information of the yard spindle requested for transit), and then compare it with the preset transit conditions (for example, whether the weight of the yard spindle of that specification is within the allowable range (Grade A: within the allowable range, Grade B: light weight, Grade C: heavy weight)). If the quality grade of the yard spindle is Grade A, the MES may determine the transit indication information as "transit permission", and notify the second PLC to start the transfer of the yard spindle. If the quality grade of the yard spindle is Grade B or Grade C, the MES may determine the transit indication information as "transit prohibition" and trigger an alarm.

Thus, through the analysis of the first business data and accurate determination of transit conditions by the MES, only yard spindles that meet the requirements may be allowed to proceed, thereby improving production accuracy and reliability. Promptly identifying and preventing the transfer of yard spindles that do not meet the transit conditions can reduce anomalies in the production process, such as equipment failures and quality issues, thereby reducing production risks. Automated determination and transit indication information may reduce manual intervention and waiting time, thereby improving the overall operational efficiency of the production line.

In the disclosed embodiment, the first PLC may obtain first business data based on second business data of a target workstation obtained from a second PLC corresponding to the target workstation, which may include the following: the first PLC may convert the second business data into the first business data in a data storage format according to a preset data storage format, where the first business data may be stored in a data storage area allocated by the first PLC for the target workstation, and different types of variables in the first business data may correspond to different fixed addresses in the data storage area.

Here, the data storage format may refer to the specific format or specification used during data storage or transmission, including data type, data unit, data encoding, etc.

Here, the data storage area may refer to a specific area within the first PLC used to store data.

Here, the fixed address may refer to a unique, unchanging storage location assigned to different variables in the data storage area. Fixed addresses may enable fast access and modification of variables.

In some embodiments, in an automatic yard spindle transit control system, a first PLC may generate first business data for a target workstation based on second business data of this target workstation. This data may contain various types of information, such as status codes, numerical parameters, timestamps, etc. The first PLC may be configured with a preset data storage format to ensure efficient data exchange and analysis between different PLCs or between the PLCs and the MES. The first PLC may convert the second business data according to this preset data storage format. The conversion process may include data type conversion (e.g., integer to floating point), unit unification (e.g., millimeters to inches), data decoding (e.g., base conversion), etc. The converted data, known as the first business data, may adhere to the preset data storage format, facilitating subsequent processing and transmission. The first PLC may allocate a dedicated data storage area for each target workstation on the production line. The first business data may be stored in the data storage area corresponding to the target workstation. During storage, different variables (e.g., status codes, numerical parameters, etc.) may be assigned to different fixed addresses within the data storage area. When reading or modifying the value of a variable, it is possible to be directly accessed through its corresponding address, improving data processing efficiency.

In this way, the preset data storage format and format conversion process may ensure consistency and accuracy during data exchange and processing across different sources. Assigning a fixed storage address to each variable may simplify data access and processing, improving overall system performance. The allocation and format definition of the data storage area may offer a degree of flexibility, allowing for expansion and adjustment based on the actual requirements of the production line.

It should be understood that the schematic diagrams shown in FIGS. 1, 3, and 4 are merely illustrative and non limited, and are expandable. Those skilled in the art may make various obvious modifications and/or substitutions based on the examples in FIGS. 1, 3, and 4, and the resulting technical solutions will still fall within the scope of the disclosed embodiments.

The present disclosure provides an automatic yard spindle transit control apparatus for use in an automatic yard spindle transit control system. The automatic yard spindle transit control system may include an MES, a first PLC, and a plurality of second PLCs, where the plurality of second PLCs may be respectively connected to the first PLC, the first PLC may be connected to the MES, and each second PLC may be used to control at least one workstation. As shown in FIG. 5, the automatic yard spindle transit control apparatus may include:
a first control module 501 configured to obtain a second position of a target workstation from a second PLC by the first PLC, when a control button of a first PLC is in an online mode and communication between the first PLC and an MES is normal; and send first business data of the target workstation obtained based on second business data to the MES to perform online transit condition determination based on the first business data by the MES and return transit indication information to the first PLC. The first business data may be generated by the first PLC based on the second business data and RFID information read from the RFID site corresponding to the target workstation.
a second control module 502 configured to, upon receiving the transit indication information by the first PLC, send an analysis result of the transit indication information to the second PLC, to cause the second PLC to control the target workstation to execute a yard spindle transit task based on the analysis result.

In some embodiments, the second business data may be generated by the second PLC based on the task execution result corresponding to the target workstation and the RFID information read from the RFID site corresponding to the target workstation.

In some embodiments, the second business data may be generated by the second PLC based on the task execution result corresponding to the target workstation.

In some embodiments, the automatic yard spindle transit control apparatus may further include a third control module (not shown in FIG. 5). The third control module may be configured to: during the yard spindle transit process, send an task control instruction to each second PLC by the first PLC based on the transit indication information from the MES and the information read from each RFID site, to cause each second PLC to control the automated equipment at the corresponding workstation to perform the corresponding task according to the corresponding indications.

In some embodiments, six RFID sites are provided for the automatic yard spindle transit control system. The first RFID site may correspond to the yard spindle doffing area, the second RFID site may correspond to the trolley loading area, the third RFID site may correspond to the weighing area, the fourth RFID site may correspond to the bagging area, the fifth RFID site may correspond to the external inspection area, and the sixth RFID site may correspond to the palletizing area.

In some embodiments, each RFID site may correspond to at least one RFID reader.

In some embodiments, the automatic yard spindle transit control apparatus may further includes a fourth control module (not shown in FIG. 5 ). The fourth control module may be configured to: determine, based on target string data corresponding to the target workstation, whether the yard spindle at the target workstation meets the transit condition; in a case of that the transit condition is met, determine transit indication information as transit permission; and in a case taht the transit condition is not met, determine the transit indication information as transit prohibition. The target string data may be obtained by analyzing the first business data by the MES.

Those skilled in the art will appreciate that the functions of various processing modules in the automatic yard spindle transit control apparatus of the present disclosure embodiment can be understood with reference to the description of the above automatic yard spindle transit control method. The various processing modules in the automatic yard spindle transit control apparatus of the present disclosure embodiment can be implemented by analog circuits that implement the functions of the present disclosure embodiment, or by software executing the functions of the present disclosure embodiment on an electronic device.

The automatic yard spindle transit control apparatus of the present disclosure embodiment may implement automated yard spindle transit management and improve yard spindle transit efficiency by integrating RFID technology, MES, and PLC control.

According to the embodiments of the present disclosure, the present disclosure also provides an electronic device and a readable storage medium.

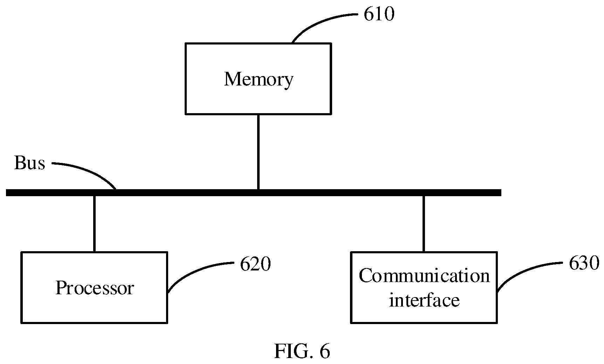

FIG. 6 is a block diagram of an electronic device for implementing an automatic yard spindle transit control method according to an embodiment of the present disclosure. As shown in FIG. 6, the electronic device may include a memory 610 and a processor 620. The memory 610 may store a computer program that can be executed on the processor 620. The number of memory 610 and processor 620 may be one or more. The memory 610 may store one or more computer programs. When executed by the electronic device, the one or more computer programs may enable the electronic device to perform the method provided in the above method embodiment. The electronic device may also include a communication interface 630 for communicating with external devices to exchange data.

If the memory 610, the processor 620, and the communication interface 630 are implemented independently, the memory 610, the processor 620, and the communication interface 630 may be interconnected via a bus and communicate with each other. The bus may be an Industry Standard Architecture (ISA) bus, a Peripheral Component Interconnect (PCI) bus, an Extended Industry Standard Architecture (EISA) bus, etc. The bus may be divided into an address bus, a data bus, a control bus, etc. For ease of illustration, FIG. 6 shows only one thick line, but this does not imply that there is only one bus or only one type of bus.

Alternatively, in a specific embodiment, if the memory 610, the processor 620, and the communication interface 630 are integrated on a single chip, the memory 610, the processor 620, and the communication interface 630 may communicate with each other via an internal interface.

It should be understood that the above processor may be a central processing unit (CPU), or other general-purpose processor, a digital signal processor (DSP), an application-specific integrated circuit (ASIC), a field programmable gate arrays (FPGA) or other programmable logic device, a discrete gate or a transistor logic device, a discrete hardware component, etc. The general-purpose processor may be a microprocessor or any conventional processor, etc. It is noticed that the processor may be a processor that supports the Advanced RISC Machines (ARM) architecture.

Further, optionally, the above memory may include a read-only memory and a random access memory, and may also include a non-volatile random access memory. The memory may be a volatile memory or a non-volatile memory, or may include both volatile and non-volatile memories. The non-volatile memory may include a read-only memory (ROM), a programmable read-only memory (PROM), an erasable programmable read-only memory (EPROM), an electrically erasable programmable read-only memory (EEPROM), or a flash memory. The volatile memory may include a random access memory (RAM), which may be used as an external cache. By way of example but not limitation, many forms of RAM are available. For example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM) and a direct RAMBUS RAM (DR RAM).

In the above embodiments, all or part of them may be implemented by software, hardware, firmware or any combination thereof. When implemented by software, they may be implemented in whole or in part in the form of a computer program product. The computer program product may include one or more computer indications. When the computer indications are loaded and executed on the computer, the process or function according to the embodiment of the present disclosure may be generated in whole or in part. The computer may be a general-purpose computer, a special-purpose computer, a computer network or other programmable apparatus. Computer indications may be stored in a computer-readable storage medium, or transmitted from a computer-readable storage medium to another computer-readable storage medium. For example, computer indications may be transmitted from one website, computer, server or data center to another website, computer, server or data center through wired (e.g., coaxial cable, optical fiber, digital subscriber line (DSL)) or wireless (e.g., infrared, Bluetooth, microwave, etc.) means. Computer-readable storage media may be any available medium accessible by a computer, or a data storage device such as a server or data center that includes one or more integrated available media. Available media may be magnetic media (e.g., floppy disks, hard disks, and tapes), optical media (e.g., digital versatile discs (DVD)) or semiconductor media (e.g., solid state drives (SSD)), etc. It is noticed that the computer-readable storage medium mentioned in the present disclosure may be a non-volatile storage medium or a non-transient storage medium.

Those skilled in the art should understand that all or part of the steps to implement the above embodiments may be implemented by hardware, or may be implemented by instructing the relevant hardware through a program, and the program may be stored in a computer-readable storage medium, and the storage medium mentioned above may be a read-only memory, a disk or an optical disk, etc.

In the description of the embodiments of the present disclosure, the description of the reference terms "one embodiment", "some embodiments", "an example", "a specific example", or "some examples" means that the specific features, structures, materials or characteristics described in combination with the embodiment or example are included in at least one embodiment or example of the present disclosure. Moreover, the specific features, structures, materials or characteristics described may be combined in any one or more embodiments or examples in a suitable manner. In addition, in the absence of contradiction, those skilled in the art may combine and combine different embodiments or examples described in this specification and the features of different embodiments or examples.

In the description of the embodiments of the present disclosure, unless otherwise specified, "/" means or. For example, A/B may mean A or B. "And/or" herein is only a kind of association relationship describing the associated objects, indicating that there may be three relationships. For example, A and/or B may mean only A, both A and B, and only B.

In the description of the embodiments of the present disclosure, terms "first", "second", and "third" are used for descriptive purposes only and cannot be understood as indicating or implying relative importance or implicitly specifying the number of the indicated technical features. Therefore, the features defined as "first", "second", and "third" may explicitly or implicitly include one or more of the features. In the description of the embodiments of the present disclosure, unless otherwise specified, "a plurality of" means two or more.

The above are only exemplary embodiments of the present disclosure and are not intended to limit the present disclosure. Any modifications, equivalent substitutions, improvements, etc. made within the principles of the present disclosure should be included in the scope of protection of the present disclosure.

## Claims

1. An automatic yard spindle transit control method for an automatic yard spindle transit control system, wherein the automatic yard spindle transit control system comprises a manufacturing execution system MES, a first programmable logic controller PLC, and a plurality of second PLCs, each of the plurality of second PLCs is configured to control at least one workstation, the plurality of second PLCs are respectively connected to the first PLC, each of the plurality of second PLCs is connected to at least one workstation, and the first PLC is capable of connecting to the MES,
the automatic silk ingot transit control method comprises:
in a case of that a control button of the first PLC is in an online mode and communication between the first PLC and the MES is normal, obtaining (S201) second business data of a target workstation from the plurality of second PLCs and sending first business data to the MES by the first PLC, to enable the MES to determine an online transit condition based on the first business data and return transit indication information to the first PLC, wherein the first business data is generated by the first PLC based on the second business data and RFID information read from a RFID site corresponding to the target workstation; and
in a case of that the first PLC receives the transit indication information, sending (S202) an analysis result of the transit indication information to the plurality of second PLCs by the first PLC, to enable the plurality of second PLCs to control the target workstation to perform a transit task based on the analysis result.

2. The method of claim 1, wherein the second business data is generated by the plurality of second PLCs based on a task execution result corresponding to the target workstation and the RFID information read from the RFID site corresponding to the target workstation.

3. The method of claim 1, wherein the second business data is generated by the second PLC based on a task execution result corresponding to the target workstation.

4. The method of claim 1, wherein the automatic yard spindles transit control method further comprises:
during a yard spindle transit process, sending, by the first PLC, a task control instruction to each of the plurality of second PLCs based on the transit indication information from the MES and RFID information read from respective RFID site, to cause each of the plurality of second PLCs to control an automated equipment at a corresponding workstation to perform a corresponding task according to a corresponding instruction.

5. The method of claim 1, wherein the automatic yard spindle transit control system comprises six RFID sites, wherein a first RFID site corresponds to a yard spindle doffing area, a second RFID site corresponds to a trolley loading area, a third RFID site corresponds to a weighing area, a fourth RFID site corresponds to a bagging area, a fifth RFID site corresponds to an external inspection area, and a sixth RFID site corresponds to a palletizing area.

6. The method of claim 5, wherein each RFID site is provided with at least one RFID reader.

7. The method of any one of claims 1 to 6, wherein determining the online transit condition comprises:
determining, based on target string data corresponding to the target workstation, whether a yard spindle at the target workstation meets a transit condition; in a case of that the transit condition is met, determining the transit indication information as transit permission; and in a case of that the transit condition is not met, determining the transit indication information as transit prohibition, wherein the target string data is obtained by analyzing the first business data by the MES.

8. An automatic yard spindles transit control apparatus for an automatic yard spindles transit control system, wherein the automatic yard spindle transit control system comprises a manufacturing execution system MES, a first programmable logic controller PLC, and a plurality of second PLCs, each of the plurality of second PLCs is configured to control at least one workstation, the plurality of second PLCs are respectively connected to the first PLC, each of the plurality of second PLCs is connected to at least one workstation, and the first PLC is capable of connecting to the MES,
the automatic yard spindles transit control apparatus comprises:
a first control module (501) configured to, in a case of that a control button of the first PLC is in an online mode and communication between the first PLC and the MES is normal, obtain second business data of a target workstation from the plurality of second PLCs and send first business data to the MES by the first PLC, to enable the MES to determine an online transit condition based on the first business data and return transit indication information to the first PLC, wherein the first business data is generated by the first PLC based on the second business data and RFID information read from a RFID site corresponding to the target workstation; and
a second control module (502) configured to, in a case of that the first PLC receives the transit indication information, send an analysis result of the transit indication information to the plurality of second PLCs by the first PLC, to enable the plurality of second PLCs to control the target workstation to perform a transit task based on the analysis result.

9. A non-transitory computer-readable storage medium storing a computer instruction thereon, wherein the computer instruction is used to cause a computer to perform the method of any one of claims 1 to 7.
